(19) Europäisches Patentamt
European Patent Office
Office européen des brevets

(11) EP 0 670 351 B1

(12) EUROPÄISCHE PATENTSCHRIFT

(45) Veröffentlichungstag und Bekanntmachung des Hinweises auf die Patenterteilung:
**25.07.2001 Patentblatt 2001/30**

(51) Int Cl.$^7$: **C08L 51/04**, C08L 77/00, C08L 23/00, C08L 67/00, C08L 71/00, C08L 81/04

(21) Anmeldenummer: **95102969.3**

(22) Anmeldetag: **02.03.1995**

(54) **Mit einem teilchenförmigen Pfropfcopolymerisat schlagzäh modifizierte Formmasse**

Impact resistant moulding compound comprising a particulate graft copolymer

Masse à mouler faite resistant au choc par un copolymère greffé particulaire

(84) Benannte Vertragsstaaten:
**BE DE FR GB NL**

(30) Priorität: **03.03.1994 DE 4407069**

(43) Veröffentlichungstag der Anmeldung:
**06.09.1995 Patentblatt 1995/36**

(73) Patentinhaber: **BASF AKTIENGESELLSCHAFT**
**67056 Ludwigshafen (DE)**

(72) Erfinder:
- **Mc Kee, Graham Edmund, Dr.**
  **D-67433 Neustadt (DE)**
- **Niessner, Norbert, Dr.**
  **D-67159 Friedelsheim (DE)**
- **Fisch, Herbert, Dr.**
  **D-67157 Wachenheim (DE)**

(74) Vertreter: **Isenbruck, Günter, Dr. et al**
**Patent- und Rechtsanwälte,**
**Bardehle-Pagenberg-Dost-Altenburg-Geissler-Isenbruck**
**Theodor-Heuss-Anlage 12**
**68165 Mannheim (DE)**

(56) Entgegenhaltungen:

| | |
|---|---|
| **EP-A- 0 450 511** | **EP-A- 0 584 363** |
| **DE-A- 3 530 304** | **US-A- 3 966 842** |

EP 0 670 351 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft eine schlagzäh modifizierte Formmasse auf der Basis eines teilchen förmigen Pfropfcopolymerisates.

Es ist bekannt, daß wasserunlösliche Öle mit einer Kombination geeigneter Emulgatoren so fein dispergiert werden können, daß optisch klare, isotrope Emulsionen entstehen, die dann als "Mikroemulsionen" bezeichnet werden (EP 449 450). Ähnliche Systeme sind auch als "Miniemulsionen" bekannt (D.O. Shah, Ed. "Macro- and Microemulsion: Theory and Practices", American Chemical Society, Washington DC, 1985; ACS Symp. Series, 272). In Miniemulsionen und Mikroemulsionen werden im Gegensatz zu den üblichen Emulsionen ("Makroemulsionen") sehr kleine Teilchengrößen der Ölphase in Wasser erhalten.

Mikroemulsionen sollen im Gegensatz zu Makroemulsionen keine eigentlichen Öltröpfchen mehr enthalten, sondern das Öl soll sich vollständig in den Emulgatormicellen befinden, welche sehr klein sein können (je nach Emulgatormenge etwa zwischen 10 und 100 nm Durchmesser, siehe auch: L.M. Gan, C.H. Chew, I. Lye, T. Imae; Polymer Bulletin 25, S. 193, 1991). Nach anderer Ansicht gibt es bislang noch keine allgemein anerkannte Definition des Ausdrucks "Mikroemulsion" (M. Antonietti et. al.; Macromolecules 24, 6636, 1991). Allgemein akzeptiert ist jedoch, daß sich eine Mikroemulsion von einer herkömmlichen Emulsion durch ihre optische Transluzenz bzw. Transparenz, durch ihre sehr kleinen Teilchen und ihre thermodynamische Stabilität unterscheidet.

Mikroemulsionen von Polymeren sind auch bereits bekannt. So beschreibt EP 391 343 feinteilige Mikroemulsionen von Polyacrylaten mit einer Glasübergangstemperatur unterhalb von 20°C und mit einer Teilchengröße unterhalb von 600 Å, d. h. 60 nm. Sie finden u. a. als Papierstreich-Dispersionen Verwendung.

JP-A-54 103 497 beschreibt die Emulsionspolymerisation von Acrylat in Gegenwart hoher Mengen an anionischen Emulgatoren zur Erzielung kleiner Teilchengrößen. Durch Zusatz von ionischen Elektrolyten ("Salzen") wird die Viskosität der Emulsion kontrolliert. Man erhält Emulsionspartikel mit einem Durchmesser zwischen 5 und 50 nm.

JP-A-54 103 493 beschreibt die Herstellung einer Acrylat-Monomer-Emulsion mit großen Mengen an Emulgator und anschließender Polymerisation. Durch Zusatz von ionischen Elektrolyten ("Salzen") wird die Viskosität der Emulsion kontrolliert. Es werden Teilchengrößen zwischen 5 und 50 nm erhalten.

JP-A-54 056 410 beschreibt die Herstellung von Acrylat-Mikroemulsionen mit bimodaler Teilchengrößenverteilung durch Scherbeanspruchung von Emulsionen mit Teilchengrößen oberhalb von 0,1 µm.

EP-A-450 511 beschreibt Pfropfpolymerisate mit mittleren Teilchengrößen von 30 bis 1000 nm, die jedoch Säurefunktionen im Pfropfkern und basische Monomereinheiten in der Pfropfhülle enthalten. Diese Polymerisate neigen in Abmischung mit Thermoplasten jedoch stark zur Agglomeration, weshalb sie für die Herstellung von Formmassen mit hoher Transparenz nicht geeignet sind.

EP-A-0 584 363 beschreibt Formmassen aus einem thermoplastischen Harz (Polyacetal, Polyester, Polycarbonat, Polyamid oder Polyphenylensulfid), die mit einem Pfropfcopolymerisat von Styrol/Acrylnitril auf einem Polysiloxan/Alkyl(meth)acrylat Mischelastomer mit einer Teilchengröße von 10 - 70 nm schlagzäh modifiziert sind.

Der Erfindung liegt die Aufgabe zugrunde, neue Formmassen zu schaffen. Diese sollen insbesondere schlagzäh sein und vorteilhafte mechanische und ggf. optische Eigenschaften, wie hohe Steifigkeit und guten Glanz, aufweisen. Darüber hinaus ist eine gute Einfärbbarkeit wünschenswert.

Diese Aufgabe wird durch die Produkte, wie sie in den Ansprüchen samt den bevorzugten Ausführungsformen definiert sind, gelöst.

Es wurde gefunden, daß durch Mischung von Mikroemulsionen von Kautschukpolymeren (Mikroemulsionspolymerisat) mit Thermoplasten schlagzähmodifizierte Thermoplaste erhalten werden, die neben einer guten Schlagzähigkeit hohe Steifigkeit und ggf. Transparenz bei hervorragendem Glanz aufweisen. Ein weiterer Vorteil dieser Formmassen ist ihre gute Einfärbbarkeit.

Die mittlere Teilchengröße des Mikroemulsionspolymerisats liegt unterhalb von 50 nm, besonders unterhalb von 40 nm und besonders vorteilhaft unterhalb von 30 nm, und die Glasübergangstemperatur unterhalb von 0°C bzw. unterhalb von -20°C bzw. unterhalb von -30°C.

In einer bevorzugten Ausführungsform enthält die erfindungsgemäße Formmasse weitere Komponenten C und/oder D und/oder E, wie unten definiert.

Die Erfindung betrifft somit eine Formmasse bestehend aus, bezogen auf die Summe aus den Komponenten A und B, und gegebenenfalls C, D und/oder E,

A: 1 - 99 Gew.-% eines teilchenförmigen Pfropfcopolymerisats aus

A1: 1 - 99 Gew.-% einer teilchenförmigen Pfropfgrundlage A1 mit einer Glasübergangstemperatur unterhalb von 0°C und einer mittleren Teilchengröße unterhalb von 40 nm, ausgewählt aus Naturkautschuk, Epichlorhydrin-Kautschuken, Ethylen-Vinylacetat-Kautschuken, Polyethylenchlorsulfonkautschuken, Polyetherkautschuken, Dienkautschuken, hydrierten Dienkautschuken, Polyalkenamer-Kautschuken, Alkylacrylat-Kautschuken aus

einem oder mehreren von Butyl-, Hexyl-, Octyl- oder 2-Ethylhexylacrylat, die bis zu 30 Gew.-% die harte Polymere bildenden Monomere Vinylacetat, (Meth)acrylnitril, Styrol, substituiertes Styrol, Methylmethacrylat, Vinylether, einpolymerisiert und weiterhin bis zu 10 Gew.-% an den vernetzend wirkenden, polyfunktionellen Monomeren Divinylbenzol, Diallylmaleat, Diallylfumarat, Diallylphthalat, Triallylcyanurat, Triallylisocyanurat, Triallylphosphat, Allylmethacrylat enthalten können, Ethylen-Propylen-Kautschuken, Ethylen-Propylen-Dien-Kautschuken, Butylkautschuken oder Fluorkautschuken,

A2: 1 - 99 Gew.-% einer Pfropfgrundlage A2 aus den Monomeren, bezogen auf A2,

A21: 40 - 100 Gew.-% Einheiten des Styrols, eines substituierten Styrols oder eines (Meth)acrylsäureesters oder deren Mischungen und

A22: bis 60 Gew.-% Acrylnitril oder Methacrylnitril,
wobei

die Pfropfauflage A2 aus mindestens einer Pfropfhülle besteht und die äußerste Pfropfhülle davon eine Glasübergangstemperatur von mehr als 0°C hat,
ein aus den Monomeren der Pfropfauflage A2 gebildetes Polymer eine Glasübergangstemperatur von mehr als 0°C aufweisen würde, und
das Pfropfcopolymerisat A ein Gewichtsmittel der Teilchengröße unterhalb von 50 nm hat,

B: 1 - 99 Gew.-% mindestens eines teilkristallinen Polymerisats B, ausgewählt aus Polyamid-6, Polyamid-6,6, Polyamid-4,6, Polyamid-6,12 und Copolyamiden davon, teilaromatischen Copolyamiden, Polyolefinen, Ionomeren, Polyalkylenterephthalaten, Polyalkylennaphthalaten, Polyetherketonen, Polyoxyalkylenen und Polyarylensulfiden,

C: 0 - 50 Gew.-% eines thermoplastischen Polyurethans,

D: 0 - 50 Gew.-% Polycarbonaten, und

E: 0 - 50 Gew.-% faser- oder teilchenförmigen Füllstoffen oder deren Mischungen.

Die mittlere Teilchengröße der Pfropfgrundlage liegt in vorteilhafter Weise unterhalb von 40 nm, besonders unterhalb von 30 nm und besonders vorteilhaft unterhalb von 25 nm, und die mittlere Teilchengröße des gesamten Pfropfpolymerisats, bestehend aus Pfropfgrundlage und darauf gepfropfter Hülle, liegt entsprechend unterhalb von 50 nm bzw. unterhalb von 40 nm bzw. unterhalb von 30 nm.

Vorzugsweise enthält die erfindungsgemäße Formmasse 5 - 70 Gew.-% Komponente A und 30 - 95 Gew.-% Komponente B, besonders bevorzugt 10 - 50 Gew.-% Komponente A und 50 - 90 Gew.-% Komponente B, jeweils bezogen auf die gesamte Formmasse.

Im folgenden wird die Erfindung näher erläutert.

Das teilchenförmige Mikroemulsionspolymerisat A der erfindungsgemäßen Formmasse ist ein Polymerisat mit mindestens einer Glasübergangstemperatur unterhalb von 0°C, vorzugsweise unterhalb von -20°C und besonders bevorzugt unterhalb von -30°C. Diese Glasübergangstemperatur wird mittels DSC (Differential Scanning Calorimetry) nach ASTM 3418 (mid point temperature) bestimmt.

Als mittlere Teilchengröße bzw. Teilchengrößenverteilung werden die aus der integralen Massenverteilung bestimmten Größen angegeben. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Teilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß er auf 10 bzw. 90 Gew.-% der Teilchen bezogen ist. Der Quotient

$$\frac{d_{90} - d_{10}}{d_{50}} = Q$$

stellt ein Maß für die Verteilungsbreite der Teilchengröße dar. Für die erfindungsgemäßen Formmassen geeignete Mikroemulsionspolymerisate A haben Q-Werte von 0,05 bis 1,0, insbesondere von 0,5 bis 0,8.

Da die Mikroemulsionspolymerisate A aufgrund ihrer geringen Teilchengröße in Emulsion das Licht nur wenig streuen, erscheinen diese Emulsionen für den Beobachter teilweise opak bis transluzent und im Grenzfall transparent. Für den Fall hoher Transluzenz (hohe "Durchsichtigkeit") bzw. Transparenz (Pfropfcopolymer-Teilchen streuen das Licht praktisch nicht mehr) ist die oben geschilderte Methode der Teilchengrößenbestimmung durch Ultrazentrifuge schwierig. Hier bietet sich als weiteres Verfahren zur Bestimmung der mittleren Teilchengröße d(50) die sogenannte dynamische Lichtstreuung oder auch "quasi-elastische" Lichtstreuung an. Diese Methode ist z. B. beschrieben in: B. J. Berne, R. Pecora, "Dynamic Light Scattering", John Wiley & Sons, Inc., New York 1976, und in: B. B. Weiner, "Modern Methods of Particle Size Analysis", Chapter 3 (Ed. H. G. Barth), John Wiley & Sons, Inc., New York 1984.

Hierbei wird der Diffusionskoeffizient kolloidal verteilter Teilchen in Lösung bzw. Emulsion bestimmt und anschließend rechnerisch über die Stokes-Einstein-Gleichung mit dem hydrodynamischen Durchmesser der Teilchen, einem Maß für die Teilchengröße, verknüpft. Haben die Teilchen eine Teilchengrößenverteilung, wie sie bei der Beschreibung der Messung mittels Ultrazentrifuge erwähnt wurde, so wird ein mittlerer Teilchendurchmesser erhalten.

Als Mikroemulsionspolymerisat A können die oben genannten Kautschuke Verwendung finden. Bevorzugt wird Acrylatkautschuk, Ethylen-Propylen(EP)-Kautschuk, Ethylen-Propylen-Dien(EPDM)-Kautschuk, insbesondere Butadien-Isopren-Kautschuk oder hydrierter Dienkautschuk eingesetzt.

Bei den Acrylatkautschuken handelt es sich vorzugsweise um Alkylacrylat-Kautschuke aus einem oder mehreren $C_4$-$C_8$-Alkylacrylaten, wobei bevorzugt mindestens teilweise Butyl-, Hexyl-, Octyl- oder 2-Ethylhexylacrylat verwendet worden sind. Diese Alkylacrylat-Kautschuke können bis zu 30 Gew.-% harte Polymere bildende Monomere wie Vinylacetat, (Meth)acrylnitril, Styrol, substituiertes Styrol, Methylmethacrylat, Vinylether, einpolymerisiert enthalten. Die Acrylatkautschuke enthalten weiterhin bis zu 10 Gew.-%, vorzugsweise 1 bis 5 Gew.-% an vernetzend wirkenden, polyfunktionellen Monomeren (Vernetzungsmonomere). Beispiele hierfür sind Monomere, die zwei oder mehr zur Copolymerisation befähigte Doppelbindungen enthalten.

Geeignete Vernetzungsmonomere sind beispielsweise Divinylbenzol, Diallylmaleat, Diallylfumarat, Diallylphthalat, Triallylcyanurat, Triallylisocyanurat, Triallylphosphat, Allylmethacrylat. Als besonders günstiges Vernetzungs-Monomer hat sich Dicyclopentadienylacrylat erwiesen (vgl. DE-PS 12 60 135).

Dien-Kautschuke sind beispielsweise Homopolymerisate von konjugierten Dienen mit 4 bis 8 Kohlenstoffatomen wie Butadien, Isopren, Piperylen und Chloropren, Copolymerisate solcher Diene untereinander und Copolymerisate solcher Diene mit Styrol-, Acryl- oder Methacrylverbindungen (z. B. Acrylnitril, Methacrylnitril, Acrylsäure, Methacrylsäure, Acrylsäurebutylester, Acrylsäureethylhexylester und Methylmethacrylat). Besonders bevorzugte Dien-Kautschuke sind Butadien-, Butadien-Styrol-, Butadien-Methylmethacrylat-, Butadien-Acrylsäurebutylester- und Butadien-Acrylnitril-Kautschuke.

Bei dem Mikroemulsionspolymerisat A kann es sich auch um ein mehrstufig aufgebautes Polymerisat handeln (sog. "Kern/Schale-Aufbau", "core-shell morphology"). Beispielsweise kann ein kautschukelastischer Kern ($T_g < 0°C$) von einer "harten" Schale (Polymere mit $T_g > 0°C$) oder umgekehrt umhüllt sein.

Als Mikroemulsionspolymerisat A können damit auch Kautschuke Verwendung finden, die bereits aus vorgebildeten Kern/Mantel-Kautschukteilchen bestehen. So kann beispielsweise der Kern aus einem Polybutadienkautschuk oder einem Siliconkautschuk, aber auch aus einem Styrol- oder Methylmethacrylat-, Homo- oder Copolymeren, wie z. B. Polystyrolacrylnitril bestehen. Der Mantel kann dann beispielsweise aus einem Polyacrylat bestehen (EP 260 558). Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z. B. EP-A 230 282, DE-OS 36 01 419, EP-A 269 861).

In manchen Fällen kann es zweckmäßig sein, ein Mikroemulsionspolymerisat A aus unvernetztem Polymer zu verwenden. Als Monomere zur Herstellung dieser Polymere können alle voranstehend genannten dienen. Bevorzugte unvernetzte Mikroemulsionspolymerisate A sind z. B. Homo- und Copolymere von Acrylsäureestern, inbesondere des n-Butyl- und des Ethylhexylacrylats, Homo- und Copolymere des Butadiens oder des Isoprens, sowie Homo- und Copolymere des Ethylens, Propylens, Butylens, Isobutylens, alle mit der Maßgabe, daß sie linear oder auch verzweigt sein dürfen.

Die Pfropfcopolymerisate A der erfindungsgemäßen Formmassen haben eine mittlere Teilchengröße $d_{50}$ unterhalb von 50 nm, bevorzugt unterhalb von 40 nm und besonders bevorzugt unterhalb von 30 nm. Diese Teilchengrößen können erzielt werden, wenn man als Pfropfgrundlage A1 dieser Komponente A Teilchengrößen unterhalb von 40 nm, bevorzugt unterhalb von 30 nm und besonders bevorzugt unterhalb von 25 nm verwendet.

Das Pfropfcopolymerisat A ist im allgemeinen ein- oder mehrstufig, d. h. ein aus einem Kern und einer oder mehreren Hüllen aufgebautes Polymerisat. Das Polymerisat besteht aus einer Grundstufe (Pfropfkern) A1 und einer oder - bevorzugt - mehreren darauf gepfropften Stufen A2 (Pfropfauflage), den sogenannten Pfropfstufen oder Pfropfhüllen.

In einer bevorzugten Ausführungsform besteht Komponente A aus einem mehrstufig aufgebauten Pfropfcopolymerisat, wobei die Pfropfstufen im allgemeinen aus harzbildenden Monomeren hergestellt sind und eine Glastemperatur $T_g$ oberhalb von 30°C haben. Der mehrstufige Aufbau dient u. a. dazu, eine (Teil-)Verträglichkeit der Kautschukteilchen A mit dem Thermoplasten B zu erzielen.

Pfropfcopolymerisate A werden hergestellt beispielsweise durch Pfropfung von mindestens einem der im folgenden aufgeführten Monomeren A2 auf mindestens eine der im folgenden aufgeführten Pfropfgrundlagen bzw. Pfropfkernmaterialien A1.

Geeignete Monomere zur Bildung der Pfropfauflage A2 können beispielsweise aus den im folgenden aufgeführten Monomeren ausgewählt sein:

Styrol und seine substituierten Derivate, wie z. B. α-Methylstyrol, p-Methylstyrol, 3,4-Dimethylstyrol, p-tert.-Butylstyrol, o- und p-Divinylbenzol und p-Methyl-α-Methylstyrol oder $C_1$-$C_8$-Alkyl(meth)acrylate wie Methylmethacrylat, Ethylmethacrylat, Methylacrylat, Ethylacrylat, n-Butylacrylat, s-Butylacrylat; bevorzugt sind Styrol, α-Methylstyrol, Methylmethacrylat, und Acryl- und Methacrylverbindungen, wie z. B. Acrylnitril, Methacrylnitril, Methylacrylat, Ethylacrylat, n- und Isopropylacrylat, n- und Isobutylacrylat, tert.-Butylacrylat, 2-Ethylhexylacrylat, Methylmethacrylat, Ethyl-methacrylat, n- und Isopropylmethacrylat, n- und Isobutylmethacrylat, tert.-Butylmethacrylat, Cyclohexylmethacrylat, Isobornylmethacrylat.

In einer bevorzugten Ausführungsform besteht die Pfropfauflage A2 aus mindestens einer Pfropfhülle und die äußerste Pfropfhülle davon hat eine Glasübergangstemperatur von mehr als 0°C, wobei ein aus den Monomeren der Pfropfauflage A2 gebildetes Polymer eine Glasübergangstemperatur von mehr als 0°C aufweisen würde.

Als Pfropfgrundlagen A1 der erfindungsgemäßen Formmassen sind alle die Polymerisate geeignet, die oben unter den Mikroemulsionspolymerisaten A beschrieben sind.

Bezüglich der Messung der Glasübergangstemperatur und der mittleren Teilchengröße sowie der Q-Werte gilt für die Pfropfcopolymerisate A das für die Mikroemulsionspolymerisate A Gesagte.

Die Pfropfcopolymerisate A können auch durch Pfropfung von vorgebildeten Polymeren auf geeignete Pfropfhomopolymerisate hergestellt werden. Beispiele dafür sind die Umsetzungsprodukte von Maleinsäureanhydrid- oder Säuregruppen enthaltenden Copolymeren mit basenhaltigen Kautschuken.

Geeignete Herstellverfahren für Pfropfcopolymerisate A sind die Emulsions-, Lösungs-, Masse- oder Suspensionspolymerisation. Bevorzugt werden die Pfropfcopolymerisate A durch radikalische Emulsionspolymerisation hergestellt, insbesondere in Gegenwart von Latices der Komponente A1 bei Temperaturen von 20°C bis 90°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C.

Geeignet als Pfropfcopolymerisate A sind auch Produkte, die als Kern einen vernetzten Dienkautschuk aus einem oder mehreren konjugierten Dienen, wie Polybutadien oder ein Copolymerisat eines konjugierten Diens mit einem ethylenisch ungesättigten Monomer, wie Styrol und/oder Acrylat und/oder Acrylnitril, und aus einer oder mehreren Pfropfhüllen enthalten.

Die Pfropfcopolymerisate A enthalten im allgemeinen 1 bis 99 Gew.-%, bevorzugt 10 bis 90 und besonders bevorzugt 30 bis 75 Gew.-% Pfropfgrundlage A1 und 1 bis 99 Gew.-%, bevorzugt 10 bis 90, besonders bevorzugt 25 bis 70 Gew.-% der Pfropfauflage A2, jeweils bezogen auf die gesamte Formmasse.

Bei der Komponente B der erfindungsgemäßen Formmasse handelt es sich um teilkristalline Polymerisate, die aus mindestens einem Polymeren aus teilkristallinen Polyamiden, teilaromatischen Copolyamiden, Polyolefinen, Ionomeren, Polyalkylenterephthalaten, Polyalkylennaphthalaten, Polyetherketonen, Polyoxyalkylenen und Polyarylensulfiden ausgewählt sind.

Als Komponente B der erfindungsgemäßen Formmasse sind teilkristalline Polyamid-6, Polyamid-6,6, Polyamid-4,6, Polyamid-6,12 und teilkristalline Copolyamide auf Basis dieser Komponenten geeignet.

Die Molekulargewichte $M_n$ (Zahlenmittel) der als Komponente B geeigneten Polyamide liegen bevorzugt im Bereich zwischen 5000 und 100 000, besonders bevorzugt zwischen 10 000 und 80 000.

Geeignet sind teilkristalline lineare Polyamide z. B. mit einer relativen Viskosität von 2,2 bis 4,5, gemessen in 1%iger Lösung (1 g/100 ml) in 96 gew.-%iger Schwefelsäure bei 23°C.

Es kann auch vorteilhaft sein, Mischungen der genannten Polyamide zu verwenden. Besondere technische Bedeutung haben Polyamid-6 (Polycaprolactam), Polyamid-6,6 (Polyhexamethylenadipinamid) und Polyamide, die zu mindestens 80 Gew.-% aus wiederkehrenden Einheiten der Formel

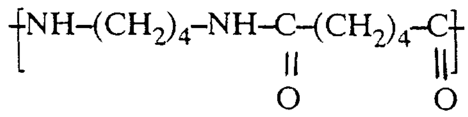

aufgebaut sind.

Derartige Polyamide sind z. B. durch Kondensation von 1,4-Diaminobutan mit Adipinsäure unter erhöhter Temperatur erhältlich. Herstellungsverfahren für Polyamide dieser Struktur sind z. B. in den EP-A-38 094, EP-A-38 582 und EP-A-39 524 beschrieben.

Am meisten bevorzugt ist Polyamid-6.

In einer weiter bevorzugten Ausgestaltung der Erfindung enthalten die erfindungsgemäßen Formmassen als Komponente B ein teilaromatisches Copolyamid mit dem im folgenden beschriebenen Aufbau.

Die teilaromatischen Copolyamide B enthalten als Komponente $b_1$) 40 - 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren, kann durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von ∈-Caprolactam ableiten ($b_2$) und/oder Einheiten, die sich von Adipinsäure und Hexamethylendiamin ($b_3$) ableiten.

Der Anteil an Einheiten, die sich von ∈-Caprolactam ableiten, beträgt maximal 50 Gew.-%, vorzugsweise 20 - 50 Gew.-%, insbesondere 25 - 40 Gew.-%, während der Anteil an Einheiten, die sich von Adipinsäure und Hexamethylendiamin ableiten, bis zu 60 Gew.-%, vorzugsweise 30 - 60 Gew.-% und insbesondere 35 - 55 Gew.-% beträgt.

Die Copolyamide können auch sowohl Einheiten von ∈-Caprolactam als auch Einheiten von Adipinsäure und Hexamethylendiamin enthalten; in diesem Fall beträgt der Anteil an Einheiten, die frei von aromatischen Gruppen sind, bevorzugt mindestens 10 Gew.-%, vorzugsweise mindestens 20 Gew.-%. Das Verhältnis der Einheiten, die sich von ∈-Caprolactam und von Adipinsäure und Hexamethylendiamin ableiten, unterliegt dabei keiner besonderen Beschränkung.

Bevorzugt werden Copolyamide, deren Zusammensetzung im Dreistoffdiagramm innerhalb des durch Eckpunkte $X_1$ bis $X_5$ festgelegten Fünfecks liegt, wobei die Punkte $X_1$ bis $X_5$ folgendermaßen definiert sind:

| | |
|---|---|
| $X_1$ | 40 Gew.-% Einheiten $b_1$)<br>60 Gew.-% Einheiten $b_3$) |
| $X_2$ | 60 Gew.-% Einheiten $b_1$)<br>40 Gew.-% Einheiten $b_3$) |
| $X_3$ | 80 Gew.-% Einheiten $b_1$)<br>5 Gew.-% Einheiten $b_2$)<br>15 Gew.-% Einheiten $b_3$) |
| $X_4$ | 80 Gew.-% Einheiten $b_1$)<br>20 Gew.-% Einheiten $b_2$) |
| $X_5$ | 50 Gew.-% Einheiten $b_1$)<br>50 Gew.-% Einheiten $b_2$) |

In EP 299 444 ist das durch diese Punkte festgelegte Fünfeck in einem Dreistoffdiagramm in einer Abbildung dargestellt.

Als besonders vorteilhaft für viele Anwendungszwecke haben sich Polyamide mit 50 - 80, insbesondere 60 - 75 Gew.-% Einheiten, die sich von Terephthalsäure und Hexamethylendiamin ableiten (Einheiten $b_1$)) und 20 - 50, vorzugsweise 25 - 40 Gew.-% Einheiten, die sich von ∈-Caprolactam ableiten (Einheiten $b_2$)), erwiesen.

Neben den vorstehend beschriebenen Einheiten $b_1$) bis $b_3$) können die erfindungsgemäßen teilaromatischen Copolyamide noch untergeordnete Mengen, vorzugsweise nicht mehr als 15 Gew.-%, insbesondere nicht mehr als 10 Gew.-% an weiteren Polyamidbausteinen enthalten, wie sie von anderen Polyamiden bekannt sind. Diese Bausteine können sich von Dicarbonsäuren mit 4 - 16 Kohlenstoffatomen und aliphatischen oder cycloalphatischen Diaminen mit 4 - 16 Kohlenstoffatomen sowie von Aminocarbonsäuren bzw. entsprechenden Lactamen mit 7 - 12 Kohlenstoffatomen ableiten. Geeignete Monomere dieser Typen sind z. B. Suberinsäure, Azelainsäure, Sebacinsäure oder Isophthalsäure als Dicarbonsäure; 1,4-Butandiamin, 1,5-Pentadiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Diamine; und Capryllactam, Önanthlactam, Omega-Aminoundecansäure und Laurinlactam als Lactame bzw. Aminocarbonsäuren.

Die Schmelzpunkte der teilaromatischen Copolyamide B) liegen im Bereich von 260 bis über 300°C, wobei dieser hohe Schmelzpunkt auch mit einer hohen Glasübergangstemperatur von in der Regel mehr als 75, insbesondere mehr als 85°C verbunden ist.

Binäre Copolyamide auf der Basis von Terephthalsäure, Hexamethylendiamin und ∈-Caprolactam weisen bei Gehalten von etwa 70 Gew.-% an Einheiten, die sich von Terephthalsäure und Hexamethylendiamin ableiten, Schmelzpunkte im Bereich von 300°C und eine Glasübergangstemperatur von mehr als 110°C auf.

Binäre Copolyamide auf der Basis von Terephthalsäure, Adipinsäure und Hexamethylendiamin erreichen bereits bei niedrigeren Gehalten von etwa 55 Gew.-% Einheiten aus Terephthalsäure und Hexamethylendiamin Schmelzpunkte von 300°C und mehr, wobei die Glasübergangstemperatur nicht ganz so hoch liegt wie bei binären Copolyamiden, die anstelle von Adipinsäure bzw. Adipinsäure/HMD ∈-Caprolactam enthalten.

Die Herstellung der teilaromatischen Copolyamide B) kann nach dem in den EP-A 129 195 und EP-A 129 196 beschriebenen Verfahren erfolgen.

Gemäß diesem Verfahren wird eine wäßrige Lösung der Monomeren, d.h. in diesem Fall der Monomeren, die die Einheiten $b_1$) bis $b_3$) bilden, unter erhöhtem Druck unter gleichzeitiger Verdampfung von Wasser und Bildung eines Präpolymeren auf eine Temperatur von 250 - 300°C erhitzt, anschließend werden Präpolymere und Dämpfe kontinuierlich getrennt, die Dämpfe rektifiziert und die mitgeführten Diamine zurückgeleitet. Schließlich wird das Präpolymer in eine Polykondensationszone geleitet und unter einem Überdruck von 1 - 10 bar und einer Temperatur von 250 - 300°C polykondensiert. Wesentlich ist bei dem Verfahren, daß die wäßrige Salzlösung unter einem Überdruck von 1 - 10 bar innerhalb einer Verweilzeit von weniger als 60 Sekunden erhitzt wird, wobei bei Austritt aus der Verdampferzone der Umsetzungsgrad vorteilhaft mindestens 93% und der Wassergehalt des Präpolymeren höchstens 7 Gew.-% beträgt.

Durch diese kurzen Verweilzeiten wird die Bildung von Triaminen weitgehend verhindert.

Die verwendeten wäßrigen Lösungen haben in der Regel einen Monomergehalt von 30 - 70 Gew.-%, insbesondere von 40 - 65 Gew.-%.

Ein weiteres Verfahren, welches dem vorstehend beschriebenen ähnelt, ist in der EP-A 129 196 beschrieben, worauf hier wegen weiterer Einzelheiten des Verfahrens verwiesen wird.

Beispiele für als Komponente B der erfindungsgemäßen Formmassen weiterhin geeignete Polymerisate sind teilkristalline Polyolefine, vorzugsweise Homo- und Copolymerisate von Olefinen wie z. B. Ethylen, Propylen, Buten-1, Penten-1, Hexen-1, Hepten-1, 3-Methylbuten-1, 4-Methylbuten-1, 4-Methylpenten-1 und Octen-1. Geeignete Polyolefine sind Polyethylen, Polypropylen, Polybuten-1 oder Poly-4-methylpenten-1. Allgemein unterscheidet man bei Polyethylen (PE) High-Density-PE (HDPE), Low-Density-PE (LDPE) und linear-low-density-PE (LLDPE).

Bevorzugte Polyolefine als Komponente B der erfindungsgemäßen Formmassen sind Polyethylen, Polypropylen und Poly-4-methylpenten-1, insbesondere bevorzugt sind Polyethylen und Polypropylen. Die Polyolefine können neben den Olefinen auch noch untergeordnete Mengen anderer Monomere enthalten.

Bei einer anderen Ausführungsform der Erfindung handelt es sich bei der Komponente B um Ionomere. Diese sind im allgemeinen Polyolefine, wie sie oben beschrieben wurden, insbesondere Polyethylen, die Monomere mit Säuregruppen cokondensiert enthalten, z. B. Acrylsäure, Methacrylsäure und ggf. weitere copolymerisierbare Monomere. Die Säuregruppen werden im allgemeinen mit Hilfe von Metallionen wie beispielsweise $Na^+$, $Ca^{2+}$, $Mg^{2+}$ und $Al^{3+}$ in ionische, ggf. ionisch vernetzte Polyolefine umgewandelt, die sich jedoch noch thermoplastisch verarbeiten lassen (siehe z. B. US-PS 3,264,272; 3,404,134; 3,355,319; 4,321,337). Es ist jedoch nicht unbedingt erforderlich, die Säuregruppen enthaltenden Polyolefine mittels Metallionen umzuwandeln. Auch freie Säuregruppen enthaltende Polyolefine, die dann im allgemeinen einen kautschukartigen Charakter besitzen und teilweise noch weitere copolymerisierbare Monomere enthalten, z. B. (Meth)acrylate, sind als erfindungsgemäße Komponente B geeignet.

Daneben können als Komponente B auch Polyalkylenterephthalate, z. B. auf Basis von Ethylenglycol, Propandiol-1,3, Butandiol-1,4, Hexandiol-1,6 und 1,4-Bis-hydroxymethyl-cyclohexan, sowie Polyalkylennaphthalate. Vorzugsweise werden Polyethylenterephthalate, Polybutylenterephthalate und Copolymere aus Cyclohexan-1,4-dimethanol und Ethylenglycol sowie Terephthalsäure eingesetzt. Insbesondere wird Polybutylenterephthalat verwendet.

Die Molekulargewichte Mw (Gewichtsmittel) der Polyalkylenterephthalate liegen im allgemeinen zwischen 10.000 und 500.000, bevorzugt zwischen 10.000 und 80.000. Die Herstellung, z. B. durch Umesterung, ist in der Literatur beschrieben (siehe z. B. US-PS 2,647,885; 2,643,989; 2,534,028; 2,578,660; 2,742,494; 2,901,466).

Als Komponente B können weiterhin aromatische Polyetherketone eingesetzt werden, wie sie z. B. beschrieben sind in den Patentschriften GB 1 078 234, US 4,010,147, EP 135 938, EP 292 211, EP 275 035, EP 270 998, EP 165 406, und in der Publikation von C. K. Sham et. al., Polymer 29/6, 1016-1020 (1988). Diese Polyetherketone können erhalten werden, indem man Bisphenole mit Bis-(halogenaryl)-ketonen in polaren aprotischen Lösungsmitteln in Gegenwart von Alkalicarbonaten, z. B. Lithiumcarbonat, umsetzt. Beispielhaft sei die Umsetzung von Hydrochinon mit 4,4'-Difluorbenzophenon genannt.

Weiterhin können als Komponente B der erfindungsgemäßen Formmassen Polyoxyalkylene, z. B. Polyoxymethylen, eingesetzt werden. Die Herstellung dieser Verbindungen ist dem Fachmann bekannt, wobei diese Polymerisate mindestens 50 mol-% an wiederkehrenden Einheiten $-CH_2O-$ in der Polymerhauptkette aufweisen. Die Homopolymeren werden im allgemeinen durch Polymerisation von Formaldehyd oder Trioxan in Gegenwart von geeigneten Katalysatoren hergestellt. Im Rahmen der Erfindung werden Polyoxymethylencopolymere als Komponente B bevorzugt, insbesondere solche, die neben den wiederkehrenden Einheiten-$CH_2O$- noch bis zu 50, vorzugsweise 0,1 bis 20 und insbesondere 0,3 bis 10 mol-% an wiederkehrenden Einheiten

$$-(O-C(R^1)(R^2)-C(R^3)(R^4)-(R^5)_n)-$$

enthalten, wobei $R^1$ bis $R^4$ unabhängig voneinander ein Wasserstoffatom, eine $C_1$-$C_4$-Alkylgruppe mit 1 - 4 C-Atomen und $R^5$ eine $-CH_2-$, $-CH_2O-$, eine $C_1$-$C_4$-Alkyl- oder $C_1$-$C_4$-Haloalkyl substituierte Methylengruppe oder eine entsprechende Oxymethylengruppe darstellen, und n einen Wert im Bereich von 0 - 3 hat. Vorteilhafterweise können diese Gruppen durch Ringöffnung von cyclischen Ethern in die Copolymere eingeführt werden. Bevorzugte cyclische Ether sind solche der Formel

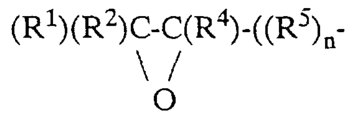

wobei $R^1$ - $R^5$ und n die oben genannten Bedeutungen haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente B ebenfalls geeignet sind Oxymethylenterpolymerisate, die beispielsweise durch Umsetzung von Trioxan, einem der vorstehend beschriebenen cyclischen Ether, mit einem dritten Monomeren, vorzugsweise einer bifunktionellen Verbindung der Formel

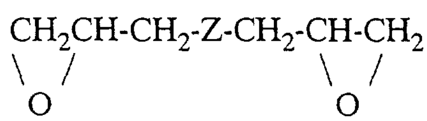

wobei Z eine chemische Bindung, -O-, -ORO- (R = $C_1$-$C_8$-Alkylen oder $C_3$-$C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2:1 sowie Diether aus 2 Mol Glycidylverbindung und 1 Mol eines aliphatischen Diols mit 2-8 C-Atomen wie beispielsweise die Diglycidylether von Ethylenglycol, 1,4-Butandiol, Cyclobutan-1,3-diol, 1,2-Propandiol und Cyclohexan-1,4-diol.

Die bevorzugten Polyoxymethylencopolymeren haben Schmelzpunkte von mindestens 150°C und Molekulargewichte (Gewichtsmittel) Mw im Bereich von 5.000 - 150.000, vorzugsweise von 7.000 - 100.000. Endgruppenstabilisierte Polyoxymethylenpolymerisate, die an den Kettenenden C-C-Bindungen aufweisen, werden besonders bevorzugt.

Weiterhin geeignete Komponenten B sind die Polyarylensulfide, insbesondere das Polyphenylensulfid. Die Herstellung ist bekannt und beispielsweise beschrieben in US-PS 3,354,129, 3,786,035, 3,853,824, 3,856,560, 3,862,095 und EP-A 171 021.

In einer bevorzugten Ausführungsform bestehen die erfindungsgemäßen Formmassen neben den Komponenten A und B aus zusätzlichen Komponenten C und/oder D und/oder E.

Die erfindungsgemäßen Formmassen können bis zu 50 Gew.-%, bevorzugt 5 bis 30 Gew.-% mindestens eines der im folgenden beschriebenen Polymerisate als Komponente C enthalten.

Bei der Komponente C handelt es sich um ein thermoplastisches Polyurethan (TPU).

Die Mischungspartner D der erfindungsgemäßen Formmassen umfassen die Polycarbonate. Geeignete Polycarbonate sind beispielsweise solche auf Basis von Diphenolen HO-Ar-A-Ar-OH, wobei -Ar- den Arylenrest (Phenylen, Alkylphenylen, halogensubstituiertes Arylen) und A eine Einfachbindung, $C_1$-$C_3$-Alkylen, $C_2$-$C_3$-Alkenyliden, $C_3$-

$C_6$-Cycloalkenylidengruppen sowie -S- oder -$SO_2$- bedeuten.

Bevorzugte Diphenole der allgemeinen Formel I sind Hydrochinon, Resorcin, 4,4'-Dihydroxybiphenyl, 2,2-Bis (4-hydroxyphenyl)-propan, 2,4-Bis(4-hydroxyphenyl)-2-methylbutan, 1,1-Bis-(4-hydroxyphenyl)-cyclohexan.

Besonders bevorzugt sind 2,2-Bis-(4-hydroxyphenyl)-propan und 1,1-Bis-(4-hydroxyyphenyl)-cyclohexan.

Polycarbonate sind allgemein bekannt und eingehend beschrieben. Sie liegen als Komponente D in Mengen von 0 bis 50 Gew.-%, bevorzugt von 10 bis 40 Gew.-%, jeweils bezogen auf die gesamte Formmasse, vor.

Als Komponente E enthalten die erfindungsgemäßen bevorzugten thermoplastischen Formmassen 0 bis 50 Gew.-%, vorzugsweise 0 bis 40 Gew.-%, insbesondere 0 bis 30 Gew.-% faser- oder teilchenförmige Füllstoffe oder deren Mischungen, jeweils bezogen auf die gesamte Formmasse. Dabei handelt es sich vorzugsweise um kommerziell erhältliche Produkte. Verstärkungsmittel wie Kohlenstoffasern und Glasfasern werden üblicherweise in Mengen von 5 bis 50 Gew.-% verwendet, bezogen auf die gesamte Formmasse.

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern (staple) mit einer Länge von 1 bis 10 µm, vorzugsweise 3 bis 6 µm, eingesetzt werden.

Weitherhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem können Metallflocken (z. B. Aluminiumflocken der Fa. Transmet Corp.), Metallpulver, Metallfasern, metallbeschichtete Füllstoffe z. B. nickelbeschichtete Glasfasern sowie andere Zuschlagstoffe, die elektromagnetische Wellen abschirmen, den erfindungsgemäßen Formmassen beigemischt werden. Insbesondere kommen Aluminiumflocken (K 102 der Fa. Transmet) für EMI-Zwecke (electro-magnetic interference) in Betracht. Ferner können die Massen mit zusätzlichen Kohlenstoffasern, Ruß, insbesondere Leitfähigkeitsruß, oder nickelbeschichteten C-Fasern vermischt werden.

Typische Zusatzstoffe sind außerdem Farbstoffe, Pigmente, Antistatika, Antioxidantien und insbesondere die Schmiermittel, die für die Herstellung von Formkörpern bzw. Formteilen zweckmäßig sind. Verarbeitungshilfsmittel und Stabilisatoren wie UV-Stabilisatoren, Schmiermittel und Antistatika werden üblicherweise in Mengen von 0,01 bis 5 Gew.-% verwendet, bezogen auf die gesamte Formmasse.

Die Herstellung der erfindungsgemäßen thermoplastischen Formmassen erfolgt nach an sich bekannten Verfahren durch Mischen der Komponenten. Es kann vorteilhaft sein, einzelne Komponenten vorzumischen. Auch das Mischen der Komponenten in Lösung und Entfernen der Lösungsmittel ist möglich.

Geeignete organische Lösungsmittel sind beispielsweise Chlorbenzol, Gemische aus Chlorbenzol und Methylenchlorid oder Gemische aus Chlorbenzol oder aromatischen Kohlenwasserstoffen, z. B. Toluol.

Das Eindampfen der Lösungsmittelgemische kann beispielsweise in Eindampfextrudern erfolgen.

Das Mischen der z. B. trockenen Komponenten kann nach allen bekannten Methoden erfolgen. Vorzugsweise geschieht jedoch das Mischen durch gemeinsames Extrudieren, Kneten oder Verwalzen der Komponenten, bevorzugt bei Temperaturen von 180 bis 400°C, wobei die Komponenten notwendigenfalls zuvor aus der bei der Polymerisation erhaltenen Lösung oder aus der wäßrigen Dispersion isoliert worden sind.

Die erfindungsgemäßen thermoplastischen Formmassen können nach den bekannten Verfahren der Thermoplastverarbeitung bearbeitet werden, also z. B. durch Extrudieren, Spritzgießen, Kalandrieren, Hohlkörperblasen, Pressen oder Sintern.

Die erfindungsgemäßen thermoplastischen Formmassen weisen vor allem eine hohe Zähigkeit, gute Chemikalien- und Witterungsstabilität sowie gute Fließfähigkeit und Steifigkeit auf.

Die Erfindung wird anhand der nachfolgenden Beispiele näher erläutert.

Beispiele

**I. Formmasse aus Mikroemulsionspolymerisat und Polyamid**

1. Herstellung der Mikrodispersionen

Mikrodispersion A

4814,4 g destilliertes Wasser, 800 g Na-Salz einer $C_{12}$- bis $C_{18}$-Paraffinsulfonsäure-Wasser-Lösung mit 40% des Salzes und 9,6 g Kaliumpersulfat wurden unter Rühren auf 65°C unter Stickstoff erwärmt. Ein Gemisch aus 2924,8 g n-Butylacrylat (91,4%), 192,0 g t-Butylacrylat (6%), 19,2 g Methacrylsäure (0,6%) und 64 g Dihydrodicyclopentadienylacrylat (2%) wurden über 3 Stunden zugegeben und dann 2 Stunden bei 70°C auspolymerisiert.

Die mittlere Teilchengröße betrug 40 nm.

Mikrodispersion A-V (Vergleichsversuch)

Dispersion A-V wurde wie Dispersion A hergestellt, jedoch wurde statt 800 g Na-Salzes einer $C_{12}$- bis $C_{18}$-Paraffinsulfonsäure-Lösung nur 96 g der Lösung verwendet.

Die mittlere Teilchengröße betrug 55 nm.

Mikrodispersion B

Dispersion B wurde wie Dispersion A hergestellt, jedoch wurden statt 2924,8 g n-Butylacrylat und 64 g Dihydrodicyclopentadienylacrylat 2892,4 und 96 g jeweils dieser Verbindungen eingesetzt.

Die mittlere Teilchengröße betrug 40 nm.

Mikrodispersion B-V (Vergleichsversuch)

Dispersion B-V wurde wie Dispersion B hergestellt, jedoch wurde statt 800 g Na-Salz einer $C_{12}$- bis $C_{18}$-Paraffinsulfonsäure-Lösung nur 96 g der Lösung verwendet.

Die mittlere Teilchengröße betrug 55 nm.

2. Abmischen

Die Herstellung der Abmischungen erfolgte in einem Extruder (Typ ZSK 53 der Fa. Werner und Pfleiderer). Der Thermoplast wurde am Einzug der Schneckenmaschine zugeführt und in einer ersten Schneckenzone mit tief eingeschnittenem Gewindeprofil plastifiziert und über eine Knetzone in eine zweite Schneckenzone gefördert, in der die wäßrige Suspension des kautschukelastischen Polymerisats dosiert zugeführt wurde, wobei die Förderung der Dispersion durch den Flüssigkeitsvordruck einer Dosierpumpe bewirkt wird.

Es wurden 85 Gew.-% Polyamid-6 (relative Viskosität 3,3, gemessen 1%ig in konzentrierter Schwefelsäure; Ultramid B35 der Fa. BASF) mit 15 Gew.-% der Mikrodispsersionen A, A-V, B und B-V innig vermischt, wobei die Vermischung bei einer Drehzahl von 150 Upm und bei einem praktisch gleichbleibenden Temperaturprofil zwischen Einzug und Austrag von etwa 250°C erfolgte (Herstellung der Abmischungen analog zu EP 125 483 B1, Seite 7, Zeilen 3 - 15).

Nach Herstellung der Polymerabmischungen wurden diese in einem Doppelschneckenextruder (ZSK 30 der Fa. Werner & Pfleiderer) nochmals extrudiert und zwar unter folgenden Bedingungen:

(a) Temperaturprofil entlang des Extruders: 120, 200, 260, 260, 260, 260, 260°C

(b) Drehzahl: 200 U/min

(c) Durchsatz: 10 kg/h

Die Formkörper wurden mit einer Massentemperatur von 280°C und einer Formtemperatur von 60°C gespritzt.

Die Kerbschlagzähigkeit wurde nach DIN 53453 bei 23°C bestimmt (Einheit: kJ/m$^2$).

Die Lochkerbschlagzähigkeit wurde nach DIN 53753-L-3,0; Ausgabe 4/81, bei 23°C bestimmt (Einheit: kJ/m$^2$).

Die Durchstoßarbeit $W_{gesamt}$ (Einheit: Nm) wurde nach DIN 53443, Teil 2 von Januar 1984, an 2 mm dicken gespritzten Rundscheiben mit einem Durchmesser von 6 cm, einem Stempeldurchmesser von 20 mm und einem Kalottenradius von 10 mm bei einer Prüfgeschwindigkeit von 4,5 m/s und einer Temperatur von 23°C bestimmt. Als Prüfmaschine wurde eine Durchstoßmaschine mit elektronischer Meßwerterfassung von der Fa. Zwick verwendet.

Tabelle 1

| Mikro-dispersion | Kerbschlag-zähigkeit | Lochkerbschlag-zähigkeit | Durchstoßarbeit $W_{gesamt}$ |
|---|---|---|---|
| A | 91 | 125 | 94 |
| A - V | 75 | 114 | 88 |
| B | 89 | 124 | n.g. [1] |
| B - V | 70 | 108 | n.g. [1] |

[1] n.g.: nicht gemessen

Die unter Verwendung der Mikrodispersionen A und B hergestellten erfindungsgemäßen Formmassen zeigen gegenüber den Vergleichsversuchen eine deutlich erhöhte Kerbschlagzähigkeit und Lochkerbschlagzähigkeit sowie eine höhere Durchstoßarbeit.

**II. Formmasse aus Kautschuk, Polyoxymethylencopolymerisat und thermoplastischem Polyurethan**

1. Herstellung der Pfropfgrundlage

Wasser, unterschiedliche Mengen des Na-Salzes einer $C_{12}$- bis $C_{18}$-Paraffinsulfonsäure (Em. 1; Handelsname: Emulgator K30), und ggf. Em. 2 (Formel siehe unten; Handelsname: Triton X 100), sowie Co-Emulgator (Hexanol) gemäß Tabelle 2, 9,2 g Kaliumperoxodisulfat, 9 g Natriumhydrogencarbonat und 4,5 g Natriumpyrophosphat wurden unter Rühren auf 65°C erwärmt. Ein Gemisch aus 1960 g n-Butylacrylat und 40 g Dicyclopentadienylacrylat wurde innerhalb von 3 Stunden zugegeben, bei 2 Stunden Nachreaktionszeit. Die Ergebnisse sind in Tabelle 2 wiedergegeben.

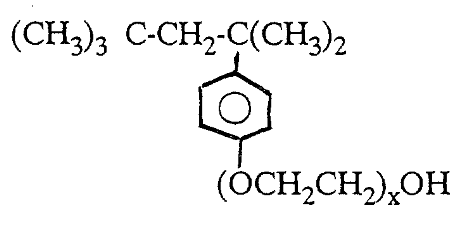

Triton X 100 (x etwa 10)

2. Pfropfung

4800 g der vorstehenden Dispersion, Wasser und 5 g Kaliumperoxodisulfat wurden unter Rühren auf 65°C erwärmt. 765 g Methylmethacrylat und 85 g n-Butylacrylat wurden innerhalb von 2 Stunden zudosiert, bei 2 Stunden

Nachreaktionszeit. Anhand der Teilchengröße und der Teilchengrößenuneinheitlichkeit kann man erkennen, daß die Pfropfhülle nicht separat neben der Pfropfgrundlage polymerisierte, sondern darauf (siehe Tabelle 3).

3. Aufarbeitung

Nach Auskoagulieren der Emulsion in der Kälte (3 Tage bei -20°C) wurde sie nach dem Auftauen filtriert, gewaschen und unter Vakuum bei 60°C getrocknet. Die getrocknete Emulsion wurde mit dem folgenden Polyoxymethylencopolymerisat als Komponente B und dem folgenden thermoplastischen Polyurethan als Komponente C vermischt:

B: Polyoxymethylencopolymerisat (POM) aus 97,3 Gew.-% Trioxan und 2,7 Gew.-% Butandiolformal. Das Produkt enthielt noch ungefähr 3 Gew.-% nicht umgesetztes Trioxan und 5 Gew.-% instabile Anteile. Nach Abbau der thermisch instabilen Anteile hatte das Copolymer einen Schmelzindex von 9 g/10 min bei 190°C und 2,16 kg nach DIN 53735. Als Stabilisator enthält das nicht abgebaute POM 0,4 Gew.-% Irganox 245 der Firma Ciba-Geigy, 0,2 Gew.-% Melaminformaldehydkondensat (hergestellt nach Beispiel 1 der DE-25 40 207), 0,1 Gew.-% Trisilicat und 0,1 Gew.-% eines Endgruppen verkappten Polyamids gemäß Beispiel 5-4 der US-A-3,960,984.

C: Ein thermoplastisches Polyurethan (Shore-Härte 85 A), hergestellt durch Umsetzung von 4,4'-Diphenylmethandiisocyanat mit Polyesterpolyol (auf Basis von Adipinsäure und 1,6-Hexandiol und 1,4-Butandiol) und 1,4-Butandiol als Kettenverlängerer.

Die Herstellung der Polymermischungen erfolgte auf einem Doppelschneckenextruder ZSK 30 der Firma Werner & Pfleiderer unter folgenden Bedingungen:

(a) Temperaturprofil entlang des Extruders: 240, 240, 240, 190, 180°C
(b) Drehzahl: 120 U/min
(c) Durchsatz: 6 kg/h

Die Durchstoßarbeit $W_{gesamt}$ wurde wie in Beispiel I bestimmt.
Die Ergebnisse sind in den nachfolgenden Tabellen 2 - 4 angegeben.

Tabelle 2: Eigenschaften der Polymermikroemulsionen (A1)

Grundstufe: Zusammensetzung 98 Gew.-% n-Butylacrylat (n-BA) + 2 Gew.-% Dihydrodicyclopentadienylacrylat (DCPA)

| **Nr.** | **Emulgator (Gew.-% bezogen auf $A1_{fest}$)** | | **Feststoffgehalt (Gew.-% Feststoffanteil in Emulsion** | | **pH** | **$d_{50}$ (nm)** | **Q* (wie auf S. 7, Zeile 5 definiert)** |
|---|---|---|---|---|---|---|---|
| | | | Theoretisch | Praktisch | | | |
| (i) | 10% | Em. 1 | 25 | 24,8 | 8,6 | 28 | 0,71 |
| (ii) | 5%<br>5% | Em. 1<br>Em. 2 | 25 | 24,9 | 8,5 | 29 | 0,69 |
| (iii) | 5%<br>5% | Em. 1<br>Hexanol | 25 | 24,0 | 8,6 | 41 | 0,68 |
| (iv) | 15%<br>15% | Em. 1<br>Em. 2 | 32,6 | 31,6 | 8,5 | 25 | 0,60 |
| Vergleich 1 | 15%<br>15% | Em. 1<br>Hexanol | 29,4 | 26,2 | 8,4 | 88 | 0,85 |

* $(d_{90} - d_{10}) : d_{50}$

Tabelle 3: Eigenschaften des Pfropfcopolymerisats (A)

Pfropfung: 50 Gew.-% Kautschuk (= 98 n-BA + 2 DCPA) + 50 Gew.-% Pfropfhülle aus 90 Gew.-% Methylmethacrylat + 10 Gew.-% n-BA)

| **Nr.** | **Grundstufe** | **Feststoffgehalt (Gew.-% Feststoffanteil in Emulsion)** | | **pH** | **$d_{50}$ (nm)** | **Q** |
|---|---|---|---|---|---|---|
| | | Theoretisch | Praktisch | | | |
| (v) | (i) | 25,0 | 25,3 | 8,2 | 37 | 0,62 |
| (vi) | (ii) | 25,0 | 25,0 | 7,9 | 40 | 0,58 |
| (vii) | (iii) | 25,0 | 24,9 | 8,9 | 53 | 0,58 |
| (viii) | (iv) | 25,0 | 24,8 | 8,8 | 33 | 0,58 |
| Vergleich 2 | Vergleich 1 | 25,0 | 24,8 | 8,4 | 111 | 0,80 |

Tabelle 4: Eigenschaften der Polymerabmischungen

| Nr. | Zusammensetzung (Gew.-%) | | | Durchstoßarbeit $W_{gesamt}$ (Nm) |
|---|---|---|---|---|
| | Kautschuk A (Gew.-%) | B (POM) (Gew.-%) | C (TPU) (Gew.%) | |
| 1 | 20 (v) | 80 | - | 2,9 |
| 2 | 20 (vi) | 80 | - | 5,0 |
| 3 | 20 (vii) | 80 | - | 4,7 |
| Vergleich 3 | 20 Vergleich 2 | 80 | - | 1,9 |
| 4 | 3 (viii) | 77 | 20 | 44 |
| Vergleich 4 | 3 Vergleich 2 | 77 | 20 | 38 |

Gemäß Tabelle 4 zeigen die erfindungsgemäßen Formmassen gegenüber den Vergleichsversuchen eine höhere Durchstoßarbeit.

## Patentansprüche

**1.** Formmasse bestehend aus, bezogen auf die Summe aus den Komponenten A und B, und gegebenenfalls C, D und/oder E,

A: 1 - 99 Gew.-% eines teilchenförmigen Pfropfcopolymerisats aus

A1: 1 - 99 Gew.-% einer teilchenförmigen Pfropfgrundlage A1 mit einer Glasübergangstemperatur unterhalb von 0°C und einer mittleren Teilchengröße unterhalb von 40 nm, ausgewählt aus Naturkautschuk, Epichlorhydrin-Kautschuken, Ethylen-Vinylacetat-Kautschuken, Polyethylenchlorsulfonkautschuken, Polyetherkautschuken, Dienkautschuken, hydrierten Dienkautschuken, Polyalkenamer-Kautschuken, Alkylacrylat-Kautschuken aus einem oder mehreren von Butyl-, Hexyl-, Octyl- oder 2-Ethylhexylacrylat, die bis zu 30 Gew.-% die harte Polymere bildenden Monomere Vinylacetat, (Meth)acrylnitril, Styrol, substituiertes Styrol, Methylmethacrylat, Vinylether, einpolymerisiert und weiterhin bis zu 10 Gew.-% an den vernetzend wirkenden, polyfunktionellen Monomeren Divinylbenzol, Diallylmaleat, Diallylfumarat, Diallylphthalat, Triallylcyanurat, Triallylisocyanurat, Triallylphosphat, Allylmethacrylat enthalten können, Ethylen-Propylen-Kautschuken, Ethylen-Propylen-Dien-Kautschuken, Butylkautschuken oder Fluorkautschuken,

A2: 1 - 99 Gew.-% einer Pfropfauflage A2 aus den Monomeren, bezogen auf A2,

A21: 40 - 100 Gew.-% Einheiten des Styrols, eines substituierten Styrols oder eines (Meth)acrylsäureesters oder deren Mischungen und

A22: bis 60 Gew.-% Acrylnitril oder Methacrylnitril,

wobei

die Pfropfauflage A2 aus mindestens einer Pfropfhülle besteht und die äußerste Pfropfhülle davon eine Glasübergangstemperatur von mehr als 0°C hat,
ein aus den Monomeren der Pfropfauflage A2 gebildetes Polymer eine Glasübergangstemperatur von mehr als 0°C aufweisen würde, und
das Pfropfcopolymerisat A ein Gewichtsmittel der Teilchengröße unterhalb von 50 nm hat,

B: 1 - 99 Gew.-% mindestens eines teilkristallinen Polymerisats B, ausgewählt aus Polyamid-6, Polyamid-6,6,

Polyamid-4,6, Polyamid-6,12 und Copolyamiden davon, teilaromatischen Copolyamiden, Polyolefinen, Ionomeren, Polyalkylenterephthalaten, Polyalkylennaphthalaten, Polyetherketonen, Polyoxyalkylenen und Polyarylensulfiden,

C: 0 - 50 Gew.-% eines thermoplastischen Polyurethans,

D: 0 - 50 Gew.-% Polycarbonaten, und

E: 0 - 50 Gew.-% faser- oder teilchenförmigen Füllstoffen oder deren Mischungen.

**2.** Formmasse nach Anspruch 1, dadurch gekennzeichnet, daß sie als teilchenförmige Pfropfgrundlage A1 einen Acrylatkautschuk enthält.

**3.** Formmasse nach einem der Ansprüche 1 oder 2, dadurch gekennzeichnet, daß es sich bei dem Polymerisat B um Polyamid-6, Polyamid-6,6, Polyamid-4,6, Polyamid 6,12 oder Copolyamide davon oder um teilaromatische Copolyamide handelt.

**4.** Formmasse nach einem der Ansprüche 1 oder 2, dadurch gekennzeichnet, daß es sich bei dem Polymerisat B um Polyoxyalkylen handelt.

## Claims

**1.** A moulding composition composed of, based on the total of components A and B and, where appropriate, C, D and/or E,

A: from 1 to 99% by weight of a particulate graft copolymer made from

A1: from 1 to 99% by weight of a particulate graft base A1 with a glass transition temperature below 0°C and with a median particle size below 40 nm, selected from the group consisting of natural rubber, epichlorohydrin rubbers, ethylene-vinyl acetate rubbers, polyethylene chlorosulphone rubbers, polyether rubbers, diene rubbers, hydrogenated diene rubbers, polyalkenamer rubbers, alkyl acrylate rubbers made from one or more of butyl, hexyl, octyl, or 2-ethylhexyl acrylate, which may contain, incorporated into the polymer, up to 30% by weight of the hard-polymer-forming monomers vinyl acetate, (meth)acrylonitrile, styrene, substituted styrene, methyl methacrylate or vinyl ethers, and may also contain up to 10% by weight of the crosslinking, polyfunctional polymers divinylbenzene, diallyl maleate, diallyl fumarate, diallyl phthalate, triallyl cyanurate, triallyl isocyanurate, triallyl phosphate, or allyl methacrylate, and of ethylene-propylene rubbers, ethylenepropylene-diene rubbers, butyl rubbers and fluorinated. rubbers,

A2: from 1 to 99% by weight of a graft A2 made from the following monomers, based on A2,

A21: from 40 to 100% by weight of units of styrene, of a substituted styrene, or of a (meth)acrylic ester, or a mixture of these, and

A22: up to 60% by weight of acrylonitrile or methacrylonitrile,

where

the graft A2 is composed of at least one graft shell, of which the outermost graft shell has a glass transition temperature above 0°C,
a polymer formed from the monomers of graft A2 would have a glass transition temperature above 0°C, and the graft copolymer A has a ponderal median particle size below 50 nm,

B: from 1 to 99% by weight of at least one semicrystalline polymer B selected from the group consisting of nylon-6, nylon-6,6, nylon-4,6, nylon-6,12, and copolyamides thereof, semiaromatic copolyamides, polyolefins, ionomers, polyalkylene terephthalates, polyalkylene naphthalates, polyether ketones, polyoxyalkylenes, and polyarylene sulfides,

C: from 0 to 50% by weight of a thermoplastic polyurethane,

D: from 0 to 50% by weight of polycarbonates, and

E: from 0 to 50% by weight of fibrous or particulate fillers, or a mixture of these.

**2.** A molding composition as claimed in claim 1, which comprises an acrylate rubber as particulate graft base A1.

**3.** A molding composition as claimed in claim 1 or 2, wherein the polymer B is nylon-6, nylon-6,6, nylon-4,6, nylon-6,12, or copolyamides thereof, or semiaromatic copolyamides.

**4.** A molding composition as claimed in claim 1 or 2, wherein the polymer B is polyoxyalkylene.

## Revendications

**1.** Masse moulée se composant de, par rapport à la somme des composants A et B, et éventuellement C, D et/ou E,

A : 1 à 99% en poids d'un copolymère greffé sous forme particulaire
A1 : 1 à 99% en poids d'une base de greffage A1 sous forme particulaire ayant une température de transition vitreuse inférieure à 0°C et une granulométrie moyenne inférieure à 40 nm, choisie parmi le caoutchouc naturel, les caoutchoucs à base d'épichlorhydrine, les caoutchoucs à base d'éthylène/acétate de vinyle, les caoutchoucs polyéthylènechlorosulfoniques, les caoutchoucs polyéthers, les caoutchoucs à base de diène, les caoutchoucs à base de diène hydrogénés, les caoutchoucs à base de polymère polyalcène, les caoutchoucs à base d'acrylate d'alkyle choisis parmi l'acrylate de butyle, l'acrylate d'hexyle, l'acrylate d'octyle ou l'acrylate de 2-éthylhexyle, qui peuvent contenir à l'état polymérisé jusqu'à 30% en poids de monomères formant des polymères durs, à savoir l'acétate de vinyle, le (méth)acrylonitrile, le styrène, le styrène substitué, le méthacrylate de méthyle, l'éther vinylique, et qui peuvent contenir encore jusqu'à 10% en poids de monomères polyfonctionnels à effet réticulant, à savoir le divinylbenzène, le maléate de diallyle, le fumarate de diallyle, le phtalate de diallyle, le cyanurate de triallyle, l'isocyanurate de triallyle, le phosphate de triallyle, le (méth)acrylate d'allyle, les caoutchoucs à base d'éthylène/ propylène, les caoutchoucs à base d'éthylène/propylène/diène, les caoutchoucs butyle ou les caoutchoucs fluorés,
A2 : 1 à 99% en poids d'un support de greffage A2 constitué des monomères, par rapport à A2,
A21 : 40 à 100% en poids de motifs du styrène, d'un styrène substitué ou d'un ester d'acide (méth)acrylique ou de leurs mélanges et
A22 : jusqu'à 60% en poids d'acrylonitrile ou de méthacrylonitrile,
où

le support de greffage A2 se compose d'au moins une enveloppe de greffage et son enveloppe de greffage la plus externe possède une température de transition vitreuse supérieure à 0°C,
un polymère formé à partir des monomères du support de greffage A2 présenterait une température de transition vitreuse supérieure à 0°C et
le copolymère de greffage A possède une granulométrie moyenne en masse inférieure à 50 nm,

B : 1 à 99% en poids d'au moins un polymère partiellement cristallin B, choisi parmi le polyamide-6, le polyamide-6,6, le polyamide-4,6, le polyamide-6,12, et leurs copolyamides, les copolyamides partiellement aromatiques, les polyoléfines, les ionomères, les poly(téréphtalate d'alkylène), les poly(naphtalate d'alkylène), les polyéthercétones, les polyoxyalkylènes et les poly(sulfure d'arylène),
C : 0 à 50% en poids d'un polyuréthanne thermoplastique,
D : 0 à 50% en poids de polycarbonates et
E : 0 à 50% en poids de charges fibreuses ou particulaires

ou leurs mélanges.

**2.** Masse moulée selon la revendication 1, caractérisée en ce qu'elle contient un caoutchouc à base d'acrylate en tant que base de greffage particulaire A1.

**3.** Masse moulée selon l'une quelconque des revendications 1 ou 2, caractérisée en ce que, quant aux polymères

B, il s'agit de polyamide-6, polyamide-6,6, polyamide-4,6, polyamide-6,12 ou de leurs copolyamides ou de copolyamides partiellement aromatiques.

4. Masse moulée selon l'une quelconque des revendications 1 ou 2, caractérisée en ce que, quant au polymère B, il s'agit d'un polyoxyalkylène.